# EUROPÄISCHE PATENTSCHRIFT

(11) **EP 0 686 377 B1**
(45) Veröffentlichungstag und Bekanntmachung des Hinweises auf die Patenterteilung: **26.08.1998**
(21) Anmeldenummer: 95108793.1
(22) Anmeldetag: 08.06.1995
(51) Int. Cl.: A61C 9/00

(54) **Verfahren und Hilfsmittel zum Herstellen von Kiefermodellen**
Method and auxiliary means for making jaw models
Procédé et moyen auxiliaire pour la fabrication des modèles maxillaires

(30) Priorität: 08.06.1994 DE 4420005
(43) Veröffentlichungstag der Anmeldung: 13.12.1995
(73) Patentinhaber: Wiencke, Günter, D-65232 Taunusstein-Seitzenhahn (DE)
(72) Erfinder: Wiencke, Günter, D-65232 Taunusstein-Seitzenhahn (DE)
(74) Vertreter: Fuchs Mehler Weiss

(56) Entgegenhaltungen:
- WO-A-93/10719

## Beschreibung

Die Erfindung betrifft ein Verfahren zum Herstellen eines aus einem Modellsockel und mittels Stiften steckbar und positionsgenau in diesem gehaltenen Zahnkranzsegmenten bestehenden Kiefermodells als Abformung eines Negativabdruckes eines Kiefers, bei dem der Zahnkranzbereich des Negativabdruckes mit einer aushärtbaren Gießmasse gefüllt und ein mit diesen Stiften bestückter Modellsockel, aus welchem Eingießabschnitte der Stifte hervorstehen, auf den Negativabdruck aufgelegt und mit den Eingießabschnitten der Stifte in die Gießmasse eingedrückt wird, die Anordnung ausreichend aushärten gelassen wird, das Modell aus dem Negativabdruck ausgehoben, der Zahnkranz mit den eingegossenen Stiften vom Modellsockel abgehoben, in einzelne Zahnkranzsegmente zerteilt und diese Segmente mittels der in sie eingegossenen Stifte wieder in den Modellsockel eingesteckt werden.

Ein derartiges Verfahren ist beispielsweise aus der WO-A-93/10719 bekannt.

Herkömmlicherweise werden Kiefermodelle mittels Gips als Gießmasse vom Negativabdruck eines Kiefers abgeformt. Das Modell wird im allgemeinen in zwei Teilen ausgebildet, einem mehr blockartigen Sockel und einem mittels der Stifte steckbar mit dem Sockel verbindbaren Zahnkranz, der seinerseits im allgemeinen wieder in einzelne Zahnkranzsegmente unterteilt wird, da für das Anfertigen von Kronen, Prothesen und dergl. zweckmäBigerweise nur mit den betroffenen Teilen des Zahnkranzes gearbeitet wird, die dadurch besser zugänglich werden.

Gießmassen unterliegen beim Aushärten sehr häufig Dimensionsänderungen. So expandiert Gips beispielsweise beim Aushärten. Diese Expansion gestaltet sich unterschiedlich für den blockartigen Modellsockel und den im wesentlichen stegartigen Zahnkranz, so daß unerwünschte Spannungen im Modell entstehen. Diese Dimensionsänderung hat aber den noch wesentlicheren Nachteil zur Folge, daß sich die einzelnen Zähne nicht mehr exakt in der Position befinden, die durch den Negativabdruck des Kiefers vorgegeben war. Dimensionsabweichungen von wenigen hundertstel Millimetern werden vom Patienten jedoch schon als störend empfunden. Um die ursprünglichen Positionen der Zähne am Modell wieder herzustellen, muß der Zahnkranz allein auch schon aus diesem Grunde in Zahnkranzsegmente zersägt werden, wobei durch den durch die Breite der Sägeschnitte erzeugten Freiraum eine gewisse Verschiebemöglichkeit besteht, um die einzelnen Zähne wieder positionsgenau am Sockel ansetzen zu können. Hierfür müssen dann die Stiftlöcher speziell gebohrt werden, was ein erhebliches Geschick und einen nicht unbeträchtlichen Arbeitsaufwand erfordert.

Um diese Nachteile im wesentlichen zu vermeiden, hat man bereits dickere Platten aus einem verhältnismäßig dimensionsstabilen Kunststoff verwendet, die bereits fertig mit einem Lochraster versehen sind, in welches die Verbindungsstifte mit ihrem Steckteil eingesteckt werden, um diesen Kunststoffsockel dann mit den vorstehenden Eingießabschnitten der Stifte in die in den Negativabdruck des Kiefers bereits eingefüllte Gießmasse einzudrücken. Für den Zahnkranz wird auch bei diesem Verfahren nach wie vor im allgemeinen Gips als Gießmasse verwendet. Die Expansion des Gipszahnkranzes beim Aushärten wird im wesentlichen durch dessen Festlegen mit einer Vielzahl von Stiften an dem verhältnismäßig dimensionsstabilen Kunststoffsockel verhindert. Dennoch ist es auch bei diesem Verfahren erforderlich, den Zahnkranz nach dem Aushärten in Segmente zu zerteilen, um ihn von Spannungen zu befreien und die einzelnen Zahnkranzsegmente wieder spannungsfrei mit ihren Stiften in die zugehörigen Löcher des Sockels einsetzen zu können.

Die Verwendung einer Kunststoffplatte als Sockel hat den großen Nachteil, daß sie auch zur Seite des Zahnkranzes hin lediglich eine ebene Fläche aufweist und dadurch bei diesem Abgießverfahren alle diejenigen Informationen des Negativabdruckes verlorengehen bzw. nicht übernommen werden können, die nicht unmittelbar den Zahnkranz betreffen. Diese Informationen über den sich unmittelbar an den Zahnkranz anschließenden Verlauf des Kiefers sind bei der Herstellung einwandfreier Zahnprothesen jedoch wichtig. Weiterhin besteht ein Nachteil bei der Verwendung solcher Kunststoffsockel darin, daß diese Sockelplatte bestenfalls auf die höchsten Erhebungen des Negativabdruckes aufgelegt werden kann, so daß das Modell des eigentlichen Zahnkranzes relativ hoch ausfällt, weil die Trennebene zwischen Zahnkranz und Sockel mehr zur Sockelseite hin verlegt werden muß. Eine größere Höhe der Zahnkranzsegmente läßt aber auch beim späteren Arbeiten mit diesen höhere Biegekräfte auf die Sockelstifte entstehen, so daß beim unvermeidlichen Ausüben von Kräften auf die Zahnkranzsegmente wiederum Positionsabweichungen entstehen können, die sich nachteilig auf die herzustellende Prothese auswirken.

Der Erfindung liegt die Aufgabe zugrunde, ein Verfahren zum Herstellen eines Kiefermodells bereitzustellen, bei dem auch mit einem Sockel gearbeitet wird, der bereits seine endgültige Gestalt angenommen hat und beim Abgießen des Zahnkranzes keine Dimensionsänderung mehr erfährt, der aber auch alle Abdruckinformationen des Kiefers außerhalb des eigentlichen Zahnkranzes aufweist. Außerdem soll bei dem Verfahren die Trennebene zwischen Sockel und Zahnkranz soweit wie möglich zum Zahnkranz hin verschoben werden, so daß der Zahnkranz bzw. seine Zahnkranzsegmente nur eine solche Höhe aufweisen, wie sie für das spätere Arbeiten unbedingt erforderlich ist.

Diese Aufgabe wird durch ein Verfahren der eingangs bezeichneten Art gelöst, welches erfindungsgemäß durch die kennzeichnenden Merkmale des Patentanspruches 1 bestimmt ist.

Erfindungsgemäß wird die Vertiefung des eigentlichen Zahnkranzbereiches im Negativabdruck durch eine dem Verlauf dieser Vertiefung angepaßte Hilfsplatte, die als Kieferkammplatte bezeichnet werden soll, in gewünschter Höhe nach oben hin verschlossen, so daß nunmehr der Sockel des Modells unter Übernahme aller Informationen des Negativabdruckes seitlich der Zahnkranzvertiefung abgegossen werden kann.

Durch die Wahl der Breite der parabelstegartig ausgebildeten Kieferkammplatte läßt sich beeinflussen, wie tief diese Platte in die Zahnkranzvertiefung des Negativabdruckes eingelegt werden kann. Dadurch bestimmt sich, wie weit in die Zahnkranzvertiefung die Gießmasse für den Sockel vordringen kann, wodurch die spätere Trennebene zwischen Sockel und Zahnkranz festgelegt wird.

Bekanntlich ist jeder Kiefer in seiner Dimension etwas anders ausgebildet, so daß die Kieferkammplatte sich nur mit Mühe so exakt ausbilden ließe, daß sie entlang ihrer gesamten Außenkante abdichtend am Negativabdruck anliegt, so daß keine Sockelgießmasse in den Zahnkranzraum eindringen kann. In bevorzugter Ausführungsform der Erfindung wird daher die Kieferkammplatte entlang ihres Randes mit einer Dichtmasse abgedichtet, wobei sie auch gleichzeitig in einer bestimmten Lage fixiert werden kann. Als Dichtmasse lassen sich Wachs, Knetmasse oder ähnliche plastische Materialien verwenden. Dieser Abdichtschritt ermöglicht es auch, mit einer begrenzten Anzahl unterschiedlicher Kieferkammplattenkonturen auszukommen, um die Mehrzahl von Kieferformen erfassen zu können.

Grundsätzlich ist es möglich, eine geschlossene Kieferkammplatte zu verwenden, auf der nach ihrem Einlegen in den Negativabdruck die Position für die Stifte in Übereinstimmung mit den Zahnpositionen im Negativabdruck erst markiert werden, um dann an diesen markierten Stellen erst Löcher für die einzusetzenden Stifte in die Kieferkammplatte zu bohren. Zum leichteren Auffinden und Markieren der Stiftpositionen sollte die Kieferkammplatte durchsichtig sein. Zum Bohren der Löcher kann sie vorübergehend wieder aus dem Negativabdruck herausgenommen werden. Das Bohren der Löcher nur an den vorgesehenen Stiftpositionen hat den Vorteil, daß keine übrigen Löcher verbleiben, durch die Gießmasse hindurchtreten könnte.

In bevorzugter Ausführungsform ist die Kieferkammplatte jedoch mit einem Lochraster versehen, um in sie vor dem Abgießen des Modellsockels an erforderlichen Stellen, d.h. dort, wo sich die Zähne befinden, unmittelbar Sockelstifte mit ihren Eingießabschnitten in die Platte einstecken zu können, so daß deren Steckabschnitte nach oben vorstehen, um von der Sockelgießmasse umgossen zu werden, wobei die Stecklöcher für die Stifte ausgebildet werden. Die Steckabschnitte der Stifte sind zu diesem Zweck regelmäßig glatt ausgeführt, damit beim Umgießen keine Hinterschneidungen entstehen. Die Bohrungen in der Kieferkammplatte können der Ausbildung der Eingießabschnitte der Stifte angepaßt werden. Es lassen sich daher unterschiedliche Stifte verwenden, wenn die Bohrungen in der Platte entsprechend ausgeführt sind. Insoweit Stifte mit leicht konischen Eingießabschnitten verwendet werden und auch die Bohrungen in der Platte entsprechend konisch ausgeführt werden, lassen sich die Stifte in ausreichender Parallellage in die Platte einstecken. Für das Verfahren selbst ist es zweckmäßig, die Platte so dünn wie möglich auszuführen, da sie in bevorzugter Ausführungsform später vom erhärteten Sockel wieder abgenommen wird. Sie sollte jedoch so dick sein, daß sie eine genügende Stabilität aufweist und auch eine ausreichende Parallelführung für die Stifte ermöglicht. Die Dicke der Platte liegt zweckmäßigerweise zwischen 1 und 3 mm.

Um nur in erforderlichen Positionen in der Kieferkammplatte Stifte positionieren zu können, ist die Platte gemäß einer bevorzugten Ausführungsform der Erfindung durchsichtig und zwar zweckmäßigerweise aus einem durchsichtigen Kunststoff ausgeführt. Dadurch lassen sich durch die Platte die Konturen des Zahnkranzbereiches erkennen, so daß die Platte nur in Zahnbereichen bestückt zu werden braucht. Bei nicht vollständiger Bestückung der Kieferkammplatte mit Stiften bleiben jedoch restliche Löcher unverschlossen, durch die Gießmasse in den Zahnkranzraum eindringen könnte. Die Erfindung sieht daher in bevorzugter Ausführung vor, daß die Kieferkammplatte mit einer dünnen Kunststoffolie belegt ist, welche keine Löcher aufweist. Dort, wo Stifte in die Platte eingesetzt werden sollen, kann die Kunststoffolie mittels der Stifte leicht durchstoßen werden, während die Folie die verbleibenden Löcher in der Platte abdeckt. Die Folie sollte natürlich ebenfalls durchsichtig sein.

Zur Ausführung des Verfahrens können die Kieferkammplatten zweckmäßigerweise in einigen unterschiedlichen vorkonfektionierten Größen gebohrt und gleich mit der Abdeckfolie versehen zur Verfügung gestellt werden. Es ist natürlich auch möglich, die Folien als Haftfolien oder Selbstklebefolien im Rohzustand oder fertig zugeschnitten zur Verfügung zu stellen, falls die Kieferkammplatten mehrfach verwendet werden sollen.

Es ist zweckmäßig, vor dem Gießen des Sockels die Höhenlage der Kieferkammplatte entlang deren Rand am Negativabdruck beispielsweise mittels eines Farbstiftes zu markieren. Diese Markierung gibt dann später an, wie hoch die Zahnkranzvertiefung des Negativabdruckes später beim Gießen des Zahnkranzes mit Gießmasse gefüllt werden muß.

Als Gießmasse für den Modellsockel wird vorzugsweise wieder Gips verwendet, weil dieses Material nicht nur umweltfreundlich zu entsorgen ist sondern in herkömmlicher Weise gut zur Übertragung aller Abdruckinformationen geeignet und sein Verhalten bekannt ist. Im bereits vollständig ausgehärteten Zustand ist der Gipssockel auch ausreichend dimensionsstabil und fest. Es kann als Gießmasse für den Sockel aber auch ein geeigneter Kunststoff verwendet werden.

In bevorzugter Ausgestaltung des Verfahrens wird nach Abnehmen des ausgehärteten Gipssockels vom Negativabdruck die Kieferkammplatte vom fertigen Sockel wieder entfernt, da sie lediglich eine Hilfsfunktion beim Herstellen des Sockels ausgeführt hat. Durch das Entfernen der Platte werden auch die Eingießabschnitte der Stifte wieder vollständig frei, um später ganz mit der Zahnkranzgießmasse umgossen zu werden. Werden Sockel und Zahnkranz aus Gips hergestellt, wobei jedoch die Gipsqualitäten unterschiedlich sein können, ist es erforderlich, die dem Zahnkranz zugewandte Fläche des Sockels gegen das Anhaften von Gips zu isolieren, damit der Zahnkranz beim Erstarren nicht eine Verbindung mit dem Sockel eingeht.

Zum Fertigstellen des Modells wird, wie gesagt, dann die Zahnkranzvertiefung des Negativabdruckes bis zu der am Rand der Kieferkammplatte vorgenommenen Markierung mit Gießmasse gefüllt und der fertige Sockel dann auf den Negativabdruck aufgelegt, wobei die Eingießabschnitte der Stifte in die Zahnkranzgießmasse eingedrückt werden. Sollte nicht ausreichend Zahkkranzgießmasse vorhanden sein, kann noch zusätzliche Gießmasse unter den Sockel eingespritzt werden.

Im Gegensatz zu dem bekannten Verfahren mit Verwendung eines plattenartigen Kunststoffsockels bedarf es beim erfindungsgemäßen Verfahren keiner Hilfsmittel zum Fixieren und Ausrichten des Sockels im Verhältnis zum Negativabdruck, da der Sockel selbst die Kontur des Negativabdruckes außerhalb des Zahnkranzes aufweist und wegen dieser komplementären Gestaltung ohne weiteres paßrichtig auf den Negativabdruck aufgesetzt werden kann. Bestimmte Einspann- oder Fixiervorrichtungen für den Negativabdruck sind daher entbehrlich.

Das Zerteilen des fertig ausgehärteten Zahnkranzes in einzelne Zahnkranzsegmente durch Sägeschnitte erfolgt auf herkömmliche Art und Weise.

Die Erfindung erstreckt sich auch auf die Kieferkammplatte selbst und deren Verwendung in dem beschriebenen Verfahren. Aus der DE-U-88 10 096 sind zwar mit einem Lochraster versehene durchsichtige Kunststoffplatten als Hilfsmittel zur Positionsfestlegung der Stifte bekannt, diese Kunststoffplatten bilden aber eine durchgehende Fläche innerhalb des Zähnkranzbogens und sind daher nicht geeignet, in eine tiefere Position in der Zahnkranzvertiefung eingelegt zu werden. Die bekannten Platten werden lediglich oberhalb des Negativmodelles angeordnet, wobei sie zusätzlich noch an einer Fixiervorrichtung geführt sind. Sie sind auch nicht mit einer das Lochraster abdeckenden Folie versehen. Ihre Verwendung für das erfindungsgemäße Verfahren ist nicht möglich.

Andererseits ist die erfindungsgemäße Kieferkammplatte ein wesentliches Hilfsmittel, mit dessen Hilfe das erfindungsgemäße Verfahren erst durchgeführt werden kann.

Im folgenden wird die Erfindung unter Hinweis auf die beigefügten Zeichnungen noch zusätzlich erläutert. Es stellen dar:
- Fig. 1: einen Querschnitt durch ein Negativmodell eines Kiefers, in dem eine Kieferkammplatte mit eingesetzten Stiften positioniert und abgedichtet und der Bereich oberhalb der Kieferkammplatte mit Sockelgießmasse ausgegossen ist, und
- Fig. 2: eine Draufsicht auf eine Kieferkammplatte.

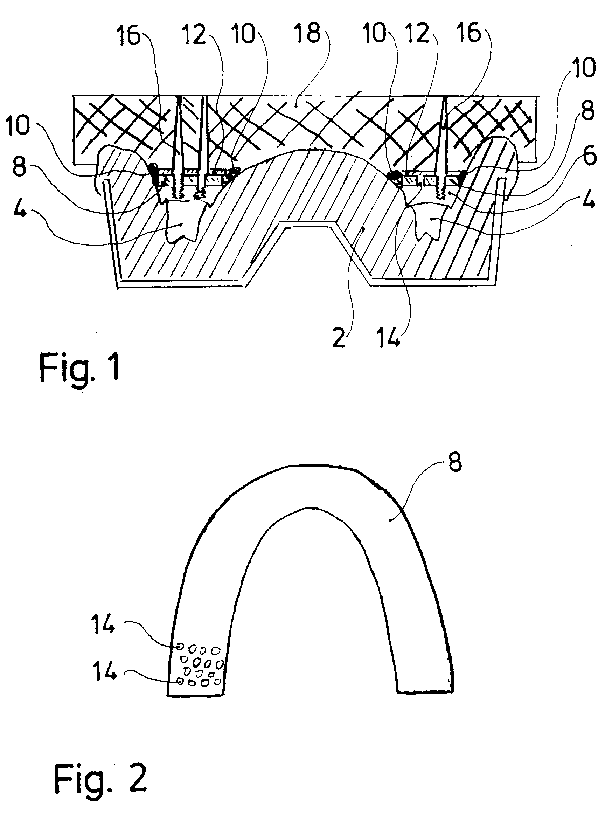

Dargestellt in Fig. 1 ist ein Querschnitt durch einen Negativabdruck 2 eines Kiefers. Der Schnitt erstreckt sich gerade durch den Abdruckbereich zweier Zähne 4, die Teil einer sich bogenförmig durch den Negativabdruck 2 erstreckenden Zahnkranzvertiefung bilden, die allgemein mit 6 bezeichnet ist. In diese Zahnkranzvertiefung 6 ist eine Kieferkammplatte 8 eingelegt, die in etwa parabelstegförmig ausgebildet und in ihrer Draufsicht in Figur 2 dargestellt ist. Wie aus Figur 1 hervorgeht, liegt diese Kieferkammplatte 8 unterhalb der Oberkante des Negativabdruckes 2 und liegt mit ihren Außenkanten in etwa an der Außenkontur der Zahnkranzvertiefung 6 an. Sie ist jedoch gegenüber dieser Außenkontur zusätzlich mit Dichtmasse 10 abgedichtet, um den unter ihr befindlichen Teil der Zahnkranzvertiefung 6 gegen das Eindringen von Gießmasse abzuschließen. Auf der Kieferkammplatte befindet sich noch eine Folie 12. Diese Folie 12 deckt Löcher 14 eines Lochrasters in der Kieferkammplatte 8 ab, welches in Figur 2 nur teilweise dargestellt ist.

In Figur 1 ist erkennbar, daß in einige Löcher 14 der Kieferkammplatte 8 Stifte 16 eingesteckt sind, die sich im wesentlichen im Bereich der Zähne 4 der Zahnkranzvertiefung befinden. Die Stifte 16 ragen mit einem Eingießabschnitt, der deshalb eine profilierte Oberfläche aufweist, durch die Kieferkammplatte 8 hindurch in die Zahnkranzvertiefung 6 hinein, während sie mit einem glatten Steckabschnitt nach oben über die Kieferkammplatte 8 vorstehen. Die Stifte sind durch die Folie 12 hindurch in die Löcher 14 der Kieferkammplatte eingesteckt worden. In Figur 1 rechts ist ein unbestücktes Loch 14 dargestellt, welches durch die an dieser Stelle noch unversehrte Folie 12 abgedeckt ist.

Der Raum oberhalb der Kieferkammplatte 8 ist mit Sockelgießmasse 18 ausgegossen, die sich lediglich im Bereich der Kieferkammplatte 8 bzw. der sie abdeckenden Folie 12 ebenflächig an diese anlegt, während sie im übrigen Bereich des Negativabdruckes 2 genau dessen Kontur folgt, so daß der Sockel als Teil des zu erstellenden Modells im Zahnkranzumgebungsbereich die tatsächliche Form des Kiefers wiedergibt.

Nach Erhärten der Sockelgießmasse wird der Sockel vom Negativabdruck 2 abgenommen und es kann dann die Kieferkammplatte vom Sockelteil entfernt werden.

Zur Fertigstellung des Modells wird dann die Zahnkranzvertiefung 6 mit Zahnkranzgießmasse bis zu einer Höhe ausgegossen, die in etwa der vorherigen Position der Oberkante der Kieferkammplatte 8 entspricht. Sodann wird der ausgehärtete Sockel 18 in gleicher Position wieder mit dem Negativabdruck 2 zusammengebracht, wobei die unteren Eingießabschnitte der Stifte 16 in die Zahnkranzgießmasse eindringen. Nach Erhärten der Zahnkranzgießmasse kann das gesamte Modell vom Negativabdruck 2 abgehoben und der Zahnkranz vom Sockel 18 abgetrennt werden, indem der Zahnkranz mit den Stiften 16 aus dem Sockel 18 herausgezogen wird.

In üblicher Weise wird der Zahnkranz dann zersägt und seine einzelnen Elemente können mittels der Stifte 16 wieder im Sockel 18 positioniert werden.

Der Figur 1 ist leicht zu entnehmen, daß durch die vertiefte Lage der Kieferkammplatte in den Zahnkranzvertiefungen 6 der Zahnkranz selbst relativ flach gehalten werden kann, während gleichzeitig der Sockel 18 dicker ausgeführt wird, indem er mit seinem Material noch teilweise in die Zahnkranzvertiefung 6 hineinragt, was bei Verwendung einer ebenen Sockelplatte nicht möglich ist. Durch die so erreichte relativ kurze Ausführung der Zähne erhalten die sie darstellenden Segmente des Zahnkranzmodelles eine verhältnismäßig stabile und verwindungssteife Lagerung im Sockel.

## Patentansprüche

1. Verfahren zum Herstellen eines aus einem Modellsockel und mittels Stiften (16) steckbar in diesem gehaltenen Zahnkranzsegmenten bestehenden Kiefermodells als Abformung eines Negativabdruckes des Kiefers,
bei dem der Zahkranzbereich des Negativabdruckes (2) mit einer aushärtbaren Gießmasse gefüllt und ein mit diesen Stiften bestückter Modellsockel, aus welchem Eingießabschnitte der Stifte hervorstehen,
auf den Negativabdruck aufgelegt und mit den Eingießabschnitten der Stifte in die Gießmasse eingedrückt wird,
die Anordnung ausreichend aushärten gelassen wird,
das Modell aus dem Negativabdruck ausgehoben,
der Zahnkranz mit den eingegossenen Stiften vom Modellsockel abgehoben, in einzelne Zahnkranzsegmente zerteilt und
diese Segmente mittels der in sie eingegossenen Stifte wieder in den Modellsockel eingesteckt werden,
dadurch gekennzeichnet, daß zum Herstellen des Modellsockels (18) eine in etwa hufeisenförmig bzw. parabelstegförmig ausgebildete Kieferkammplatte (8) als Hilfsmittel in den Negativabdruck (2) eingelegt wird, welche den vertieften Zahnkranzbereich (6) in etwa in Höhe des Kieferkammes nach oben im wesentlichen verschließt, daß bestimmte Positionen für das Einsetzen von Stiften (16) an der Kieferkammplatte (8) festgelegt werden, daß entsprechend diesen Positionen Stifte (16) mit ihrem Eingießabschnitt zur Zahnkranzseite der Kieferkammplatte (8) weisend in die Kieferkammplatte (8) eingefügt werden, und daß der Bereich des Negativabdruckes (2) oberhalb der Kieferkammplatte (8) mit einer aushärtbaren Gießmasse (18) ausgegossen und die Gießmasse zum Ausbilden des Modellsockels aushärten gelassen wird.

2. Verfahren nach Anspruch 1, dadurch gekennzeichnet, daß eine Kieferkammplatte (8) aus einem durchsichtigen Material, insbesondere einem durchsichtigen Kunststoffmaterial verwendet wird.

3. Verfahren nach Anspruch 1 oder 2, dadurch gekennzeichnet, daß nach dem Festlegen der Positionen für die Stifte (16) Löcher (14) für das Einfügen der Stifte (16) in diesen Positionen in die Kieferkammplatte (8) gebohrt werden.

4. Verfahren nach Anspruch 1 oder 2, dadurch gekennzeichnet, daß eine Kieferkammplatte (8) verwendet wird, die mit einem Lochraster (14) versehen ist.

5. Verfahren nach Anspruch 4, dadurch gekennzeichnet, daß die Kieferkammplatte (8) mit einer durchsichtigen Folie (12) belegt ist bzw. wird, durch welche hindurch die Stifte (16) mit ihren Eingießabschnitten in die Löcher (14) der Kieferkammplatte (8) eingesteckt werden.

6. Verfahren nach mindestens einem der Ansprüche 1 bis 5, dadurch gekennzeichnet, daß eine Kieferkammplatte (8) mit einer Dicke von 1 bis 3 mm verwendet wird.

7. Verfahren nach mindestens einem der Ansprüche 1 bis 6, dadurch gekennzeichnet, daß die Kieferkammplatte (8) vor dem Ausgießen des Raumes oberhalb von ihr entlang ihres Randbereiches mit einer Dichtmasse (10) gegenüber dem Negativabdruck (2) fixiert und/oder abgedichtet wird.

8. Verfahren nach Anspruch 7, dadurch gekennzeichnet, daß als Dichtmasse (10) Wachs oder Knetmasse oder Silikon verwendet wird.

9. Verfahren nach mindestens einem der Ansprüche 1 bis 8, dadurch gekennzeichnet, daß die Kieferkammplatte (8) nach ausreichendem Aushärten des Modellsockels (18) wieder von diesem entfernt wird.

10. Verfahren nach mindestens einem der Ansprüche 1 bis 9, dadurch gekennzeichnet, daß als Gießmasse für den Modellsockel Gips verwendet wird.

11. Verfahren nach mindestens einem der Ansprüche 1 bis 10, dadurch gekennzeichnet, daß die Lage der Kieferkammplatte (8) im Negativabdruck (2) mit einem Farbstift oder dergleichen markiert wird.

12. Verfahren nach Anspruch 11, dadurch gekennzeichnet, daß beim Ausgießen des Zahnkranzbereiches (6) diese bis zu dieser Markierung im Negativabdruck (2) mit Gießmasse gefüllt und dann der Modellsockel auf den Negativabdruck (2) aufgesetzt wird.

13. Verfahren nach Anspruch 12, dadurch gekennzeichnet, daß erforderlichenfalls zusätzliche Gießmasse unter den Modellsockel injiziert wird.

14. Verfahren nach mindestens einem der Ansprüche 10 bis 13, dadurch gekennzeichnet, daß als Gießmasse für den Zahnkranz Gips, insbesondere ein Hartgips verwendet wird und die dem Zahnkranzbereich zugewandte Seite des Modellsockels gegen das Anhaften von Gips isoliert wird.

15. Kieferkammplatte als Hilfsmittel zum Herstellen eines Kiefermodells als Abformung eines Negativabdruckes (2) eines Kiefers in Form eines flächigen Gebildes von in etwa hufeisenförmiger oder parabelstegförmiger Gestalt, deren Fläche in etwa der Querschnittsfläche eines Kiefers in Höhe der Zahnansätze bzw. des Kieferkammes entspricht.

16. Kieferkammplatte nach Anspruch 15, dadurch gekennzeichnet, daß sie aus einem durchsichtigen Material besteht.

17. Kieferkammplatte nach Anspruch 16, dadurch gekennzeichnet, daß sie mit einem Raster von Stiftaufnahmelöchern (14) versehen ist, die die Platte im wesentlichen senkrecht zu deren Fläche durchdringen.

18. Kieferkammplatte nach Anspruch 17, dadurch gekennzeichnet, daß sie mit einer nicht gelochten durchsichtigen Folie (12) belegt ist.

19. Kieferkammplatte nach mindestens einem der Ansprüche 15 bis 18, dadurch gekennzeichnet, daß sie eine Dicke zwischen 1 und 3 mm aufweist.

20. Verwendung einer durchsichtigen, mit einem Lochraster (14) versehenen und mit einer durchsichtigen Folie (12) belegten Platte (8) von in etwa hufeisenförmiger bzw. parabelstegförmiger Gestalt zum Abdecken des Zahnkranzhohlraumes (6) in einem Negativabdruck (2) eines Kiefers beim Gießen des Sockels (18) für ein Kiefermodell.

## Claims

1. Process for making an orthodontic model, as a representation of a negative mould of the jaw, consisting of a model base and dental ring segments insertably held in said base by means of pins (16), which involves filling the dental ring zone of the negative mould (2) with a hardenable casting compound and placing onto the negative mould a model base equipped with these pins and from which protrude casting-in sections of the pins, and pressing the model base into the casting compound by the casting-in sections of the pins, leaving the arrangement to harden sufficiently, ejecting the cast from the negative mould, lifting the dental ring with the cast-in pins away from the model base, separating it into individual dental ring segments, and using the pins cast into them to re-insert these segments into the model base,
**characterised in that** to make the model base (18) an approximately horseshoe-shaped jaw ridge plate (8) or one of parabolic web-shaped construction is placed by way of auxiliary fixture into the negative mould (2), which upwardly substantially occludes the depressed dental ring zone (6) approximately at the level of the jaw ridge, that specific positions are established for mounting pins (16) on the jaw ridge plate (8), that in accordance with these positions pins (16) are fitted into the jaw ridge plate (8) with their casting-in section directed towards the dental-ring side of the jaw ridge plate (8), and that the region of the negative mould (2) above the jaw ridge plate (8) is plugged with a hardenable casting compound (18) and the casting compound is left to harden to form the model base.

2. Process according to claim 1, characterised in that a jaw ridge plate (8) made from a transparent material is used, in particular a transparent polymer material.

3. Process according to claim 1 or 2, characterised in that after the positions for the pins (16) have been established, holes (14) for the insertion of the pins (16) in these positions are drilled into the jaw ridge plate (8).

4. Process according to claim 1 or 2, characterised in that a jaw ridge plate (8) is used which is provided with a perforated grid (14).

5. Process according to claim 4, characterised in that the jaw ridge plate (8) has been or is now covered with a transparent film (12) through which the pins (16) are pushed by their casting-in sections into the holes (14) in the jaw ridge plate (8).

6. Process according to at least one of claims 1 to 5, characterised in that a jaw ridge plate (8) having a thickness of 1 to 3 mm is used.

7. Process according to at least one of claims 1 to 6, characterised in that before the space above it is plugged, the jaw ridge plate (8) is fixed in place and/or sealed, relative to the negative mould (2), using a sealing compound (10) along its peripheral region.

8. Process according to claim 7, characterised in that wax or mixing compound or silicone is used as the sealing compound (10).

9. Process according to at least one of claims 1 to 8, characterised in that once the model base (18) has hardened sufficiently the jaw ridge plate (8) is removed from it again.

10. Process according to at least one of claims 1 to 9, characterised in that plaster is used as the casting compound for the model base.

11. Process according to at least one of claims 1 to 10, characterised in that the position of the jaw ridge plate (8) in the negative mould (2) is marked with a coloured pen or the like.

12. Process according to claim 11, characterised in that when plugging the dental ring region (6) the latter is filled with casting compound up to said mark in the negative mould (2) and then the model base is placed onto the negative mould (2).

13. Process according to claim 12, characterised in that if necessary extra casting compound is injected beneath the model base.

14. Process according to at least one of claims 10 to 13, characterised in that plaster, in particular a hard plaster, is used as the casting compound for the dental ring, and the side of the model base that faces the dental ring region is isolated against the adhesion of plaster.

15. Jaw ridge plate as an auxiliary fixture for making a orthodontic model, as a representation of a negative mould (2) of a jaw, in the form of a two-dimensional structure of approximately horseshoe shaped or parabolic web-shaped configuration, the surface of which approximately matches the cross-sectional surface of a jaw at the level of the dental attachments, or of the jaw ridge.

16. Jaw ridge plate according to claim 15, characterised in that it consists of a transparent material.

17. Jaw ridge plate according to claim 16, characterised in that it is provided with a grid of pin locator holes (14) which pass through the plate substantially perpendicularly to the surface thereof.

18. Jaw ridge plate according to claim 17, characterised in that it is covered with an unperforated transparent film (12).

19. Jaw ridge plate according to at least one of claims 15 to 18, characterised in that it has a thickness of between 1 and 3 mm.

20. Use of a transparent plate (8) of approximately horseshoe-shaped or parabolic web-shaped configuration, provided with a perforated grid (14) and covered with a transparent film (12), for masking the dental ring cavity (6) in a negative mould (2) of a jaw when casting the base (18) for an orthodontic model.

## Revendications

1. Procédé pour la fabrication d'un modèle de mâchoire constitué d'un socle et de segments de denture maintenus dans celui-ci par l'enfichage de pointes (16), et obtenu par le moulage d'une empreinte négative de la mâchoire, procédé selon lequel on remplit la région de la denture de l'empreinte négative (2) d'une masse de moulage durcissable, et on pose un socle équipé desdites pointes et dont des sections de ces pointes débordent sur l'empreinte négative, et on l'enfonce, avec lesdites sections des pointes, dans la masse de moulage, on laisse durcir le dispositif suffisamment longtemps, on soulève le modèle en le sortant de l'empreinte négative, on soulève du socle la denture avec les pointes fixées par moulage, on la divise en différents segments et on enfiche à nouveau ces segments au moyen des tiges fixées par moulage dans le socle, caractérisé en ce que pour la fabrication du socle (18), on insère, pour servir d'accessoire, dans l'empreinte négative (2), une plaque maxillaire (8) sensiblement en forme de fer à cheval ou de parabole qui ferme sensiblement vers le haut la région approfondie (6) de la denture au niveau de la crête maxillaire, en ce qu'on définit des positions déterminées pour l'insertion de pointes (16) sur la plaque (8), en ce qu'en fonction de ces positions, on introduit dans la plaque (8) des pointes (16) dont la section de moulage est orientée vers le côté de la denture de ladite plaque (8), et en ce qu'on coule une masse de moulage durcissable 18 dans la région de l'empreinte négative (2) au-dessus de la plaque (8), et qu'on laisse durcir cette masse pour former le socle du modèle.

2. Procédé selon la revendication 1, caractérisé en ce que l'on utilise une plaque maxillaire (8) en une matière transparente, en particulier en une matière plastique transparente.

3. Procédé selon la revendication 1 ou 2, caractérisé en ce qu'après la détermination des positions des pointes (16), on perce des trous 14 pour l'introduction desdites pointes 16 dans ces positions dans la plaque (8).

4. Procédé selon la revendication 1 ou 2, caractérisé en ce qu'on utilise une plaque maxillaire (8) munie d'une trame perforée (14).

5. Procédé selon la revendication 4, caractérisé en ce que la plaque maxillaire (8) est garnie d'un film transparent (12) à travers lequel on introduit les pointes (16) par leur section de moulage dans les trous (14) de ladite plaque (8).

6. Procédé selon au moins l'une des revendications 1 à 5, caractérisé en ce qu'on utilise une plaque maxillaire (8) d'une épaisseur de 1 à 3 mm.

7. Procédé selon au moins l'une des revendications 1 à 6, caractérisé en ce que la plaque maxillaire (8) est fixée et/ou étanchéisée par rapport à l'empreinte négative (2) avant la coulée d'une masse d'étanchéité (10) dans l'espace situé au-dessus de ladite plaque le long de sa région marginale.

8. Procédé selon la revendication 7, caractérisé en ce qu'on utilise pour servir de masse d'étanchéité (10) de la cire ou une masse pouvant être pétrie ou du silicone.

9. Procédé selon au moins l'une des revendications 1 à 8, caractérisé en ce que la plaque maxillaire (8), après durcissement suffisant du socle (18) est éliminée de celui-ci.

10. Procédé selon au moins l'une des revendications 1 à 9, caractérisé en ce qu'on utilise du plâtre pour servir de masse de moulage pour le socle.

11. Procédé selon au moins l'une des revendications 1 à 10, caractérisé en ce que la position de la plaque maxillaire (8) dans l'empreinte négative (2) est marquée à l'aide d'un crayon de couleur ou analogue.

12. Procédé selon la revendication 11, caractérisé en ce que lors du moulage de la région (6) de la denture, on remplit celle-ci avec la masse de moulage jusqu'au marquage tracé dans l'empreinte négative (2), et que l'on pose ensuite le socle sur cette empreinte négative (2).

13. Procédé selon la revendication 12, caractérisé en ce que, si nécessaire, on injecte une quantité supplémentaire de masse de moulage sous le socle.

14. Procédé selon au moins l'une des revendications 10 à 13, caractérisé en ce que l'on utilise pour servir de masse de moulage de la denture du plâtre, en particulier du plâtre dur, et que l'on isole contre l'adhésion de ce plâtre, le côté du socle orienté vers la région de la denture.

15. Plaque maxillaire servant d'auxiliaire pour la fabrication d'un modèle de mâchoire réalisé par le moulage d'une empreinte négative (2) d'une mâchoire, ayant la forme d'une structure plane en forme sensiblement de fer à cheval ou de parabole, dont la surface correspond approximativement à celle de la section transversale d'une mâchoire à la hauteur des racines des dents ou de la crête maxillaire.

16. Plaque maxillaire selon la revendication 15, caractérisée en ce qu'elle est constituée en une matière transparente.

17. Plaque maxillaire selon la revendication 16, caractérisée en ce qu'elle est munie d'une trame de perforations (14) pour la réception des pointes, qui traversent la plaque sensiblement perpendiculairement à sa surface.

18. Plaque maxillaire selon la revendication 17, caractérisée en ce qu'elle est garnie d'un film transparent (12) non perforé.

19. Plaque maxillaire selon au moins l'une des revendications 15 à 18, caractérisée en ce qu'elle présente une épaisseur comprise entre 1 et 3 mm.

20. Utilisation d'une plaque 8 transparente, garnie d'un film transparent (12) muni d'une trame perforée (14), de forme sensiblement en fer à cheval ou en parabole, destinée à recouvrir la cavité maxillaire (6) dans une empreinte négative (2) d'une mâchoire lors de la coulée du socle (18) destiné à devenir un modèle de mâchoire.
